# EUROPEAN PATENT APPLICATION

(11) **EP 0 987 646 A2**
(43) Date of publication of application: **22.03.2000**
(21) Application number: 99117627.2
(22) Date of filing: 07.09.1999
(51) Int. Cl.: G06K 7/08

(54) **RFID reader/writer device**

(30) Priority: 14.09.1998 US 152550
(71) Applicant: Brady Worldwide, Inc., Milwaukee, WI 53209 (US)
(72) Inventor: Hall, Bradley, Oconomowoc, WI 53066 (US); Thornton, Karl, E., Allenton, WI 53002 (US); Pearson, John P., Fox Point, WI 53217 (US); Scharpf, Peter G., Hartford, WI 53027 (US); Vanden Heuvel, Kenneth J., Milwaukee, WI 52311 (US); Barrett, Tony J., Milwaukee, WI 53217 (US)
(74) Representative: Lippert, Hans, Dipl.-Ing.

(57) **Abstract**

The present invention provides a radio frequency identification reader/writer device (10) having a housing (12). Circuitry disposed in the housing (12) interacts with a compatible RFID transponder through an antenna and serially communicates with a host computer. The housing (12) is wand shaped and formed from a rigid shell and a soft elastomeric material is overmolded onto a portion of said shell. The elastomeric material seals the housing interior form adverse conditions.

## Description

### BACKGROUND OF THE INVENTION

The field of invention is radio frequency identification (RFID) reader/writer devices, more particularly an ergonomic, explosion safe RFID reader/writer wand.

RFID devices are known in the art, such as disclosed in U.S. Patent No. 5,347,263, which is fully incorporated herein by reference. These devices are used in systems for access control, animal feeding and health programs, inventory control, process control, and security applications.

A typical RFID system has a passive transponder having circuitry therein and a RFID reader/writer. A RFID reader/writer energizes the transponder circuitry by transmitting a power signal. The power signal may convey data which is stored in a transponder memory or the transponder circuitry may transmit a response signal containing data previously stored in its memory. If the transponder circuitry transmits a response signal, the RFID reader/writer receives the response signal and interprets the data contained therein. The data is then transmitted to a host computer for processing.

As the use of RFID systems becomes more widespread, their use in dangerous and adverse environments becomes more prevalent. One particularly dangerous environment is an area containing potentially explosive materials. The use of conventional RFID reader/writers in these environments is not advised because of the risk that they may produce a spark. This risk is magnified if the reader/writer device is damaged as, for example, by being dropped or mishandled. Many reader/writer devices are bulky and poorly balanced in weight, making them susceptible to damage from mishandling. These devices are especially subject to damage from dropping due to their non-ergonomic design.

Therefore, there is a need for an ergonomically designed RFID reader/writer that is protected from adverse conditions and inherently safe in explosive environments.

### BRIEF SUMMARY OF THE INVENTION

The present invention provides a radio frequency identification reader/writer device having a housing with circuitry disposed in the housing that interacts with a compatible RFID transponder through an antenna and serially communicates with a host computer. The housing is wand shaped and formed from a rigid shell with a soft elastomeric material overmolded onto a portion of the shell. The housing construction and circuitry provides an ergonomic device that is sealed from adverse conditions and may be used in explosive environments.

The present invention is protected from adverse conditions by overmolding the soft elastomeric material on mating surfaces of the housing shell to seal the housing interior from the environment. Sealing the shell interior from the environment accomplishes the general objective of providing a RFID reader/writer device that is protected from adverse conditions.

Another objective of the present invention is to be inherently safe in an explosive environment. This objective is accomplished by limiting the voltage in the wand circuitry to avoid providing an ignition source in an explosive environment.

Still another objective of the present invention is to provide an ergonomic reader/writer device. This objective is accomplished by providing a wand shaped housing having a handle for gripping by a user and a tapered nose for easy insertion into recesses.

The foregoing and other objects and advantages of the invention will appear from the following description. In the description, reference is made to the accompanying drawings which form a part hereof, and in which there is shown by way of illustration a preferred embodiment of the invention.

### BRIEF DESCRIPTION OF THE DRAWINGS

Fig. 1 is a perspective view of an RFID reader/writer device incorporating the present invention;
Fig. 2 is an exploded view of Fig. 1;
Fig. 3 is a cross section view along line 3-3 of the device of Fig. 1;
Fig. 4 is a cross section view along line 4-4 of the wand of Fig. 1;
Fig. 5 is a detailed view along line 5-5 of the device of Fig. 4;
Fig. 6 is a block diagram of the circuitry of Fig. 1;
Fig. 7 is a schematic of the power subsystem of Fig. 6;
Fig. 8 is a schematic of the communications subsystem of Fig. 6;
Fig. 9 is a schematic of the RF subsystem of Fig. 6;
Fig. 10 is a schematic of the microcontroller subsystem of Fig. 6;
Fig. 11 is a schematic of a timer of the microcontroller subsystem of Fig. 10;
Fig. 12 is a schematic of the switch of the microcontroller subsystem of Fig. 10;
Fig. 13 is a schematic of the indicator light of the microcontroller subsystem of Fig. 10;
Fig. 14 is a schematic of the feedback motor of the microcontroller subsystem of Fig. 10; and
Fig. 15 is a schematic of the speaker of the microcontroller subsystem of Fig. 10.

### DETAILED DESCRIPTION OF THE PREFERRED EMBODIMENTS

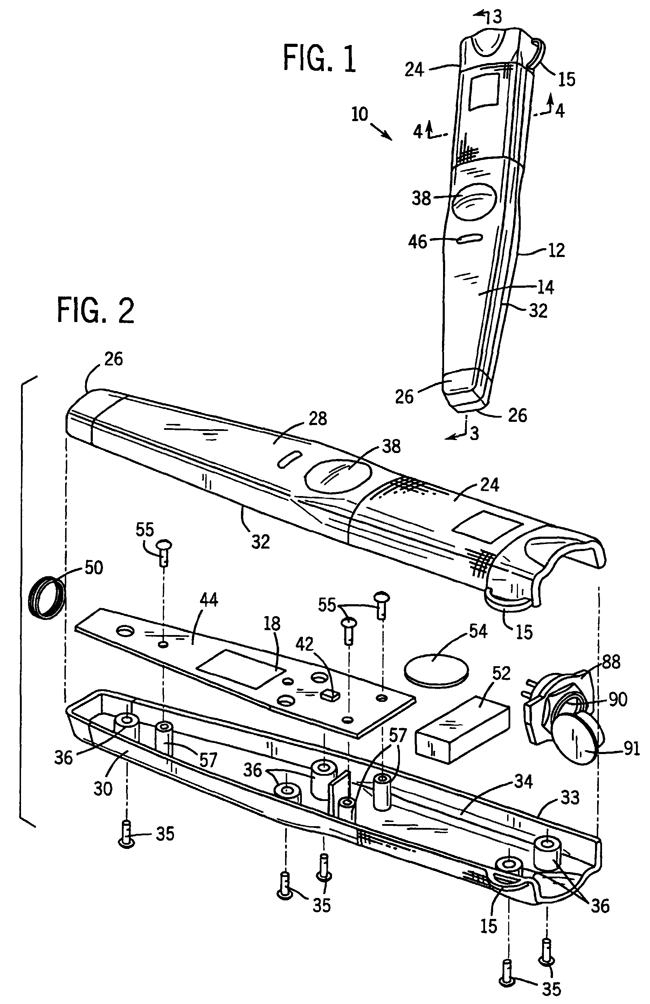

Referring to Figs. 1 -6, an RFID reader/writer wand 10 has a housing 12 which is a rigid shell 14 overmolded with a soft elastomeric material covering 16. Circuitry 18 disposed on a circuit board 44 mounted within the housing 12 communicates with a host computer 20 and a conventional RFID transponder 22, such as that available from Philips Semiconductors, a division of Philips Electronics N.V., Eindhoven, The Netherlands.

The housing 12 has a handle 24 at one end for gripping by a user and a tapered nose 26 at the other end for insertion into a recess (not shown) that contains the RFID transponder 22. A soft elastomeric covering 16, such as carbon impregnated SANTOPRENE, available from Advanced Elastomer Systems, L.P., Akron, Ohio, is overmolded around the handle 24 and nose 26 of the wand to absorb shocks resulting from the wand 10 striking a surface. The covering 16 at the handle 24 is rounded to reduce user hand fatigue. An eyelet 15 formed in the housing provides an attachment point for a cord or chain.

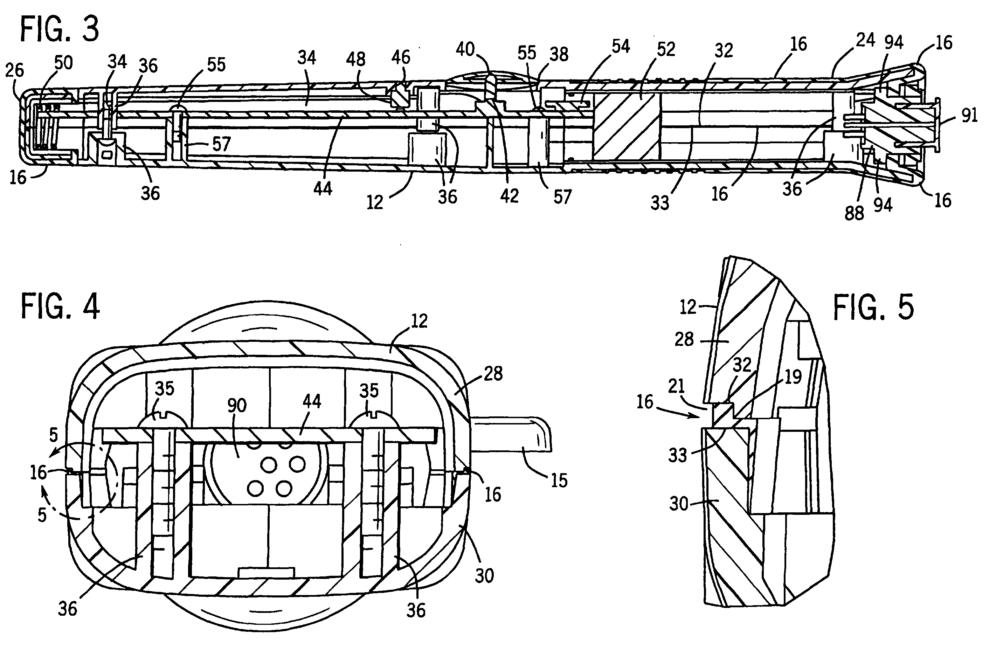

Looking particularly at Figs. 2 and 3, the rigid shell 14 has a top half 28 and a bottom half 30 which are joined together at mating surfaces 32 and define a cavity 34. The halves 28, 30 are formed from a rigid plastic material, such as a co-polypropylene plastic impregnated with graphite fibers, and are joined together at mating surfaces 32, 33. The co-polypropylene with graphite fibers provides good impact strength, high chemical resistance, and structural rigidity. Advantageously, the graphite fibers improve the impact strength of the plastic and provide sufficient electrostatic dissipative properties to meet the Underwriters Laboratories requirements for intrinsically safe operation. Screws 35 threadably inserted into screw bosses 36 formed in the two shell halves 28, 30 ensure a tight fit between the halves 28, 30.

The soft elastomeric covering 16 is overmolded on the flat mating surface 33 of the lower half 30 to seal the wand cavity 34 from adverse environmental conditions. As shown in Fig. 5, the covering 16 along the mating surfaces 32, 33 acts like a gasket sealing the housing cavity 34 from the environment. As shown more clearly in Pig. 5, the top half mating surface 32 is stepped providing an edge 19 which bites into the soft elastomeric covering 16 overmolded on the bottom half mating surface 33. When the two shell halves 28, 30 are joined, the stepped edge 19 of the upper shell mating surface 32 bites into and compresses the elastomeric material 16 sealing the seam between the two shell halves 28, 30. Advantageously, the stepped surface 19 also provides a gap 21 for a portion of uncompressed covering 16 to curl around the upper shell 28 ensuring a positive seal.

A first opening 38 in the shell top half 28 is disposed between the wand handle 24 and nose 26. The opening 38 receives an actuator 40 for a depressible switch 42. The depressible switch 42 is mounted on the circuit board 44 and electrically connected to the circuitry 18 thereon. The actuator 40 is held in place and the first opening 38 is sealed by overmolding the soft elastomeric covering 16 over the opening 38.

A second opening 46 in the shell top half 28 is disposed between the first opening 38 and the wand nose 26. A clear acrylic lens (not shown) is inserted into the second opening 46. An indicator light 48 electrically connected to the circuitry 18 and disposed beneath the lens provides a visual indication to the user that the circuitry 18 is activated or has successfully read a transponder 22.

Looking at Figs. 2-4,6, a connector plate 88 is disposed at the handle 24 end of the housing 12 and has a male electrical receptacle 90 mounted therein. The receptacle 90 is electrically connected to the circuitry 18 through a wiring harness (not shown) and receives the female end of a plug (not shown) electrically connected to the host computer 20 by a cable 64. Preferably, the receptacle 90 has a twist lock feature and an enclosure rating of at least IP-66, such as that available from Switchcraft, Inc., Chicago, Illinois. A cap 91 fits over the receptacle 90 to protect the receptacle 90 when not in use.

The soft elastomeric covering 16 also seals the seam between the connector plate 88 and the housing 12. Looking particularly at Fig. 4, the covering 16 is molded over the rear end of the shell halves 28, 30 and forms an annular ring half 94 on the inside rear of both shell halves 28, 30. When the shell halves 28, 30 are assembled, the annular ring halves 94 form an annulus that receives the connector plate 88 and further seals the shell cavity 34 from the environment.

An antenna 50 is disposed within the tapered nose 26 of the wand 10 and is electrically connected to the circuitry 18 for transmitting power signals to and receiving data from the transponder 22. Preferably, the antenna 50 is a coil for greater transmission and reception efficiency at carrier frequencies under 20 MHz.

A feedback motor 52 attached to the circuit board 44 provides tactile feedback to the user after a successful read or write operation is performed. Activation of the feedback motor 52 by the wand circuitry 18 causes the wand 10 to vibrate in the user's hand. The vibration is the tactile feedback to the user indicating a successful read or write operation by the wand 10 is accomplished.

The circuit board 44 having the circuitry 18, the depressible switch 42 , and a speaker 54 mounted thereon is mounted in the wand cavity 34 using screws 55 threadably inserted into screw bosses 57, or the like. The speaker 54 is electrically connected to the circuitry 18 and provides audible feedback to the user of a successful read or write operation.

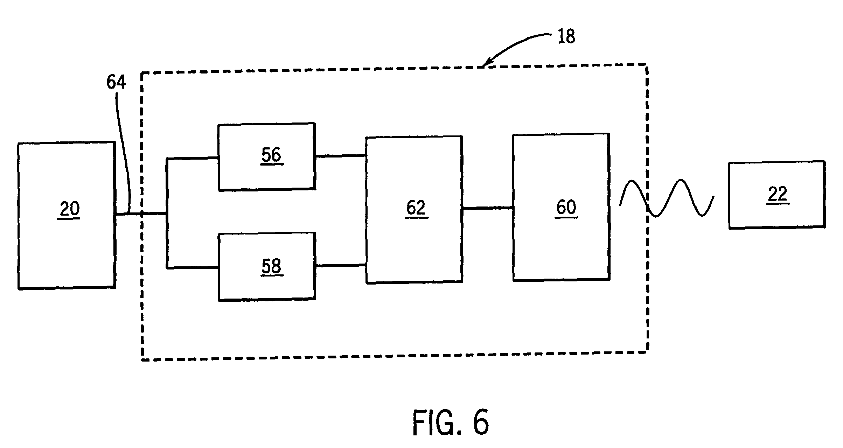

Looking particularly at the circuit block diagram in Fig. 6, the circuitry 18 is composed of four subsystems; a power subsystem 56 for regulating power within the wand circuitry 18; a communications subsystem 58 for serially communicating with the host computer 20; a radio frequency subsystem 60 for translating digital signals from a microcontroller subsystem 62 into RF signals which are transmitted to a transponder 22 and vice versa; and the microcontroller subsystem 62 for controlling the first three subsystems 56, 58, and 60.

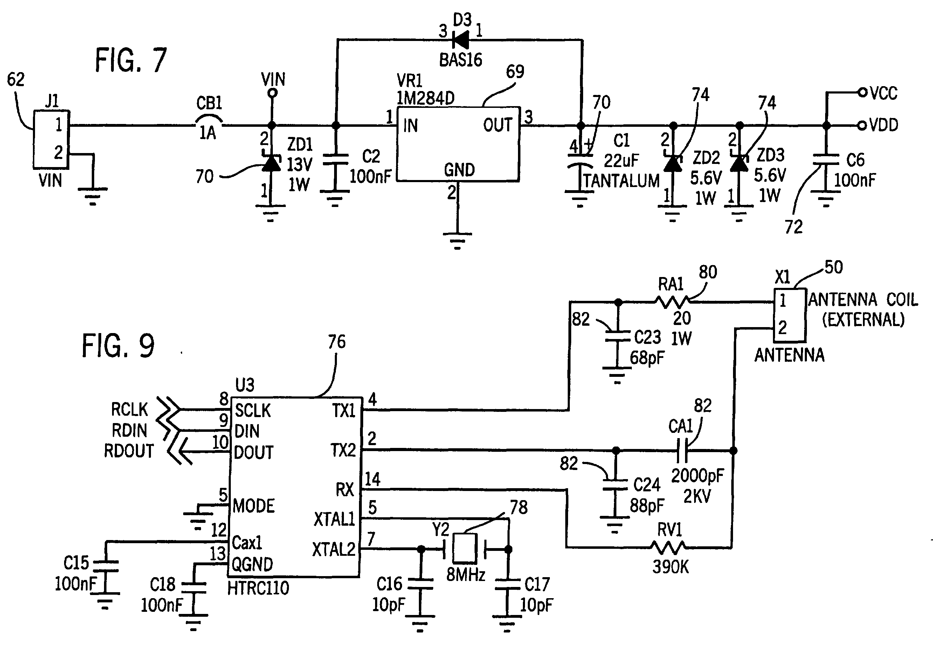

The power subsystem 56 receives power from the host computer 22 through a cable 64 and regulates the power for the wand circuitry 18. Looking particularly at the schematic of Fig. 7, input power 62 is regulated by a voltage regulator 69, such as a LM2940 voltage regulator available from National Semiconductor, Inc., Santa Clara, California, which limits the input power signal to a range of 4.7 to 12.0 volts. A zener clamping diode 70, such as available from Diodes, Inc., Westlake Village, California, at the input of the voltage regulator 69 restricts the input voltage to less than 13.0 volts and a fuse 72 limits the current to less than 1.0 ampere further protecting the wand circuitry 18. The output of the voltage regulator 69 is conditioned by a 22 µf tantalum capacitor 70 and a 100 nf capacitor 72 to minimize electrical noise.

Preferably, a pair of 5.6 V zener diodes 74 are connected to the output of the voltage regulator 69 to provide overvoltage protection to the circuitry 18 in the event of the voltage regulator 69 failing. These 5.6 V zener diodes 74 provide an intrinsically safe operation in potentially explosive environments. The pair of 5.6 V zener diodes 74 are used to provide extra protection through redundancy. Additional pairs of 10 µf and 100 nf capacitors (not shown) are distributed in the power subsystem 56 to reduce electrical noise in the circuitry.

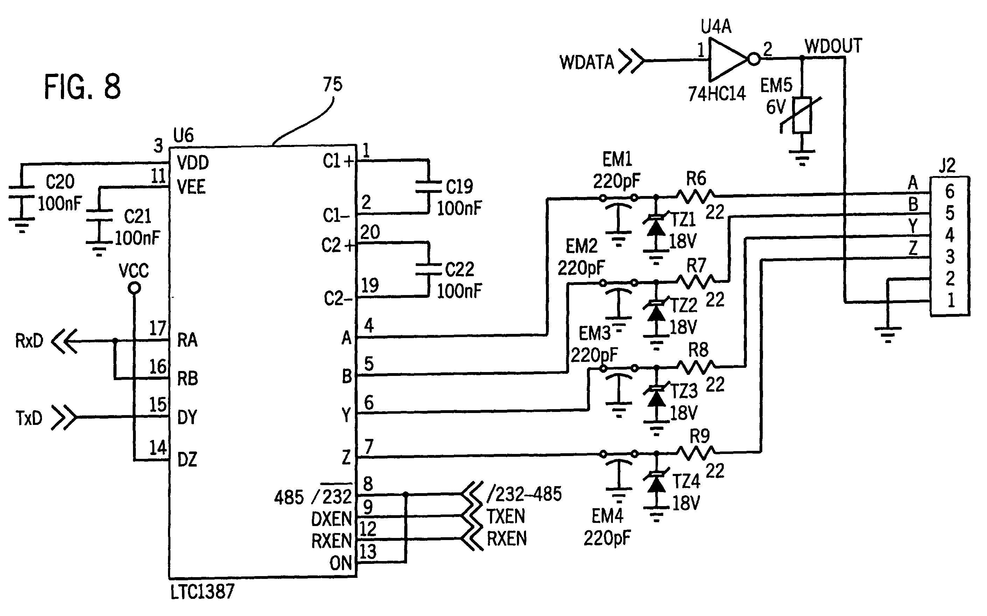

Referring back to Fig. 6, the communications subsystem 58 is electrically connected by the cable 64 to the host computer 22 for serial communication with the host computer. Communication with the host computer using RS-232, RS-422, RS-485 protocols, and bar code emulation are supported by the communications subsystem 58. As shown in the schematic of Fig. 8, the communication protocol is selected by signals from the host computer 22 to the serial communication subsystem 58 which are processed by a serial communication integrated circuit 75, such as a LTC1387 serial communication integrated circuit available from Linear Technology Corporation, Milpitas, California.

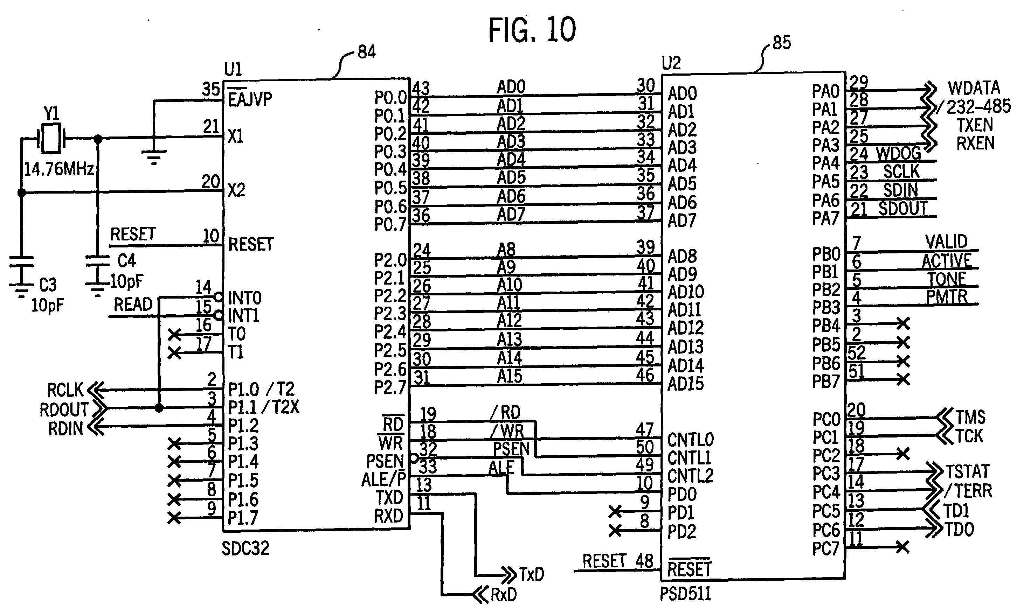

Referring back to Fig. 6, the RF subsystem 60 translates digital signals from the microcontroller subsystem 62 into a RF signal which is then transmitted to a transponder 22 through the antenna 50. RF signals received through the antenna 50 are translated by the RF subsystem 60 into digital signals which are sent to the microcontroller subsystem 62. Looking particularly at Fig. 9, preferably, the RF subsystem 60 has a Philips HTRC Reader integrated circuit 76 that performs amplitude modulation and demodulation of a baseband signal at 125 kHz. In the preferred embodiment, the baseband signal is generated by an 8 MHz oscillator circuit 78 having a resonant frequency which is divided by 64 to produce the 125 kHz signal. Resistors 80 and capacitors 82 are electrically connected to the HTRC reader 76 for proper tuning of the signal transmitted and received through the antenna 50.

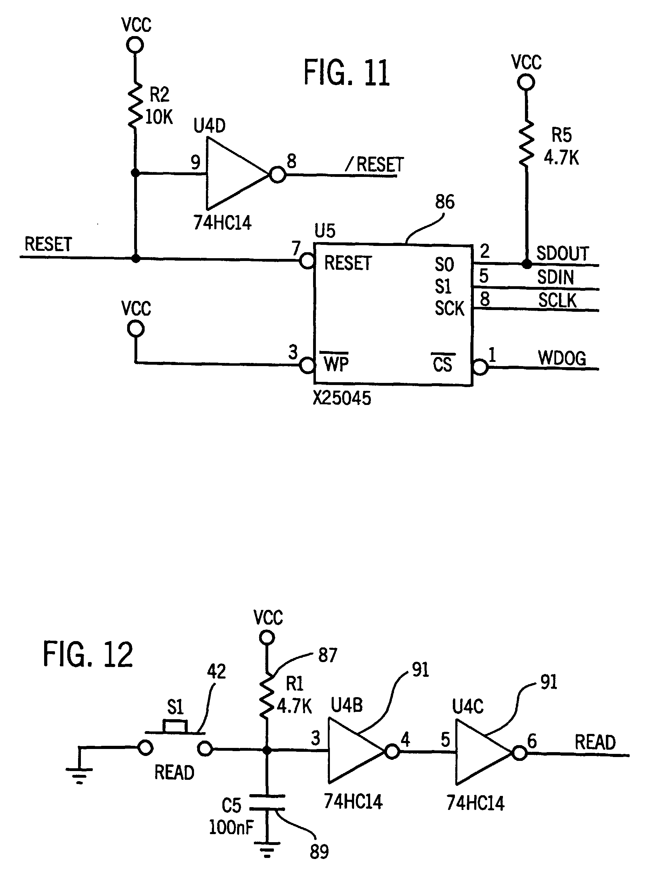

As shown in Fig. 10, the microcontroller subsystem 62 has a processor 84, such as a 80C32 8-bit microcontroller available from Philips Semiconductors, a division of Philips Electronics N.V., Eindhoven, The Netherlands, and a memory chip 85, such as a WSI PSD611 chip available from WSI, Inc., Fremont, California, having random access memory, read only memory, and configurable I/O which interact with and control the other subsystems 56, 58, and 60. The processor 84 processes the digital signals from the RF subsystem 60 to detect and communicate using several RFID protocols, such as EM-Microelectronics H-400X, V4050, and Philips Hitag I & II, that allow it to read and write to a variety of RFID transponders 22 through the RF subsystem 60 and antenna 50. Preferably, as shown in Fig. 11, a timer 86, such as a X25045 watchdog timer with a low voltage dropout detection available from Xicor, Inc., Milpitas, California, is triggered periodically by a signal from the processor 84 to ensure that the circuitry 18 has not malfunctioned or locked up.

The microcontroller subsystem 62 receives the input from the depressible switch 42 initiating a read. Preferably, as shown in Fig. 12, the signal generated by the switch 42 is debounced by a resistor 87 and capacitor 89 network and a pair of inverters 91 in series to avoid initiating multiple reads of the same transponder 22.

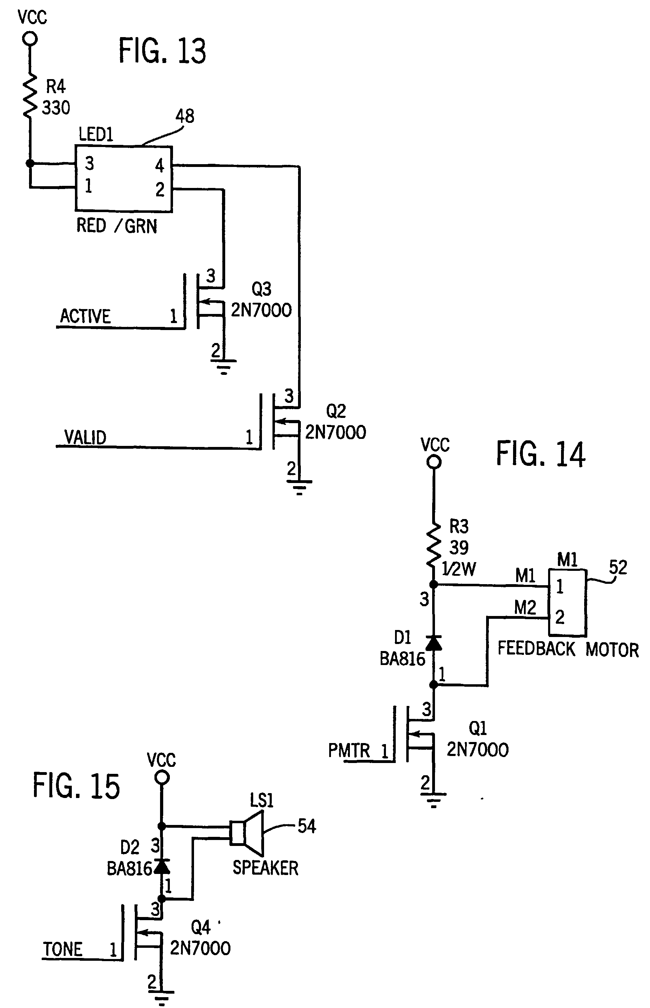

User feedback after a successful read is also controlled by the processor 84. As shown in Fig. 13, the red/green LED indicator light 48 is driven by a logic signal from the processor 84 to indicate that power is on or a successful read or write operation has been accomplished. As shown in Figs. 14 and 15, the feedback motor 52 and speaker 54 are also driven by a logic signal from the processor 84.

Referring back to Fig. 6, the cable 64 provides power to the wand 10 and a pathway for communications between the wand circuitry 18 and the host computer 20. Although a cable 64 for power and communication is described herein, other methods of providing power and a communication path may be used, such as through batteries and wireless communication circuitry in the wand, without departing from the scope of the present invention.

The host computer 20 communicates with the wand circuitry 18 using standard computer interfaces, such as RS-232, RS-422, RS-485, and wand emulation software. Commands from the host computer 20 specify wand circuitry 18 operations, such as whether to perform a read or write operation, the type of communication protocol that is used to transfer data, whether to initiate an operation after the wand button has been depressed, and the like. Data read from the transponder 22 by the wand 10 is transmitted to the host computer 20 for subsequent processing.

In use, the host computer 20 establishes communications with the wand circuitry 18 and sends a command through the cable 64 to the wand communications subsystem 58 for a transponder 22 to be read upon actuation of the depressible switch 42. The communication subsystem 58 receives the command and passes it in digital form to the microcontroller subsystem 62. The processor 84 in the microcontroller subsystem 62 processes the command and waits for the depressible switch 42 button to be actuated.

Upon actuation of the switch 42, the microcontroller subsystem 62 sends a command to the RF subsystem 60 to transmit a series of power signals through the antenna 50 at a carrier frequency of 125 kHz, which may also be modulated, until a response is received from the targeted transponder 22. The response signal from the transponder 22 is translated into a digital form by the RF subsystem 60 and passed on to the microcontroller subsystem 62.

The microcontroller subsystem 62 extracts data from the digitized signal and sends it to the communications subsystem 58. The communications subsystem 58 serially transmits the data to the host computer 20. Upon a successful operation, the speaker 54 emits a sound, the LED indicator light 48 turns green, and the feedback motor 52 vibrates the wand 10.

While there has been shown and described what are at present considered the preferred embodiment of the invention, it will be obvious to those skilled in the art that various changes and modifications can be made therein without departing from the scope of the invention defined by the appended claims.

In summary, the invention provides a radio frequency identification reader/writer device having a housing. Circuitry disposed in the housing interacts with a compatible RFID transponder through an antenna and serially communicates with a host computer. The housing is wand shaped and formed from a rigid shell and a soft elastomeric material is overmolded onto a portion of said shell. The elastomeric material seals the housing interior form adverse conditions.

## Claims

1. A radio frequency identification reader/writer comprising:
a rigid shell (14), having a first end and a second end;
an antenna (50) disposed within said shell;
circuitry (44) disposed within said shell and operatively connected to said antenna for interacting with a compatible radio frequency identification transponder (22); and
a soft elastomeric material (16) overmolded onto at least a portion of said shell.

2. A radio frequency identification reader/writer as in claim 1, wherein said rigid shell (14) is formed from two halves (28, 30) having mating surfaces (32, 33).

3. A radio frequency identification reader/writer as in claim 2, wherein said elastomeric material (16) is overmolded onto said mating surface (32, 33) of one of said halves, wherein, preferably, the mating surface of the other of said halves is stepped (at 19).

4. A radio frequency identification reader/writer as in claim 1, wherein said shell (14) is wand shaped.

5. A radio frequency identification reader/writer as in any one of the claims 1 to 4, wherein said antenna (50) is disposed toward said second end (26) of said shell, wherein, preferably, said second end is tapered.

6. A radio frequency identification reader/writer as in any one of the claims 1 to 5, wherein said housing or shell has a button (40) interposed between said first and second ends for initiating said interaction with said transponder (22).

7. A radio frequency identification reader/writer as in any one of the claims 1 to 6, further comprising a feedback motor (52) for providing vibratory feedback to a user upon an interaction with said transponder (22).

8. A radio frequency identification reader/writer as in any one of the claims 1 to 7, wherein said circuitry (18) is powered by a cable electrically connected to an external power source or by a power source (56) disposed within said shell.

9. A radio frequency identification reader/writer as in any one of the claims 1 to 8, wherein said circuitry is communicatively connected to a host computer (20), preferably, by a cable (64).

10. A radio frequency identification reader/writer as in any one of the claims 1 to 8, wherein said circuitry (18) is operatively connected to a host computer (20) by wireless communication.

11. A radio frequency identification reader/writer as in any one of the claims 1 to 10, wherein said circuitry (18) is adapted for use with transponders (22) having different protocols.

12. A radio frequency identification system for use in an explosive environment, wherein said system comprises:
a radio frequency transponder (22);
a radio frequency reader/writer device (10) having a housing (14), said housing having circuitry (18) disposed therein for interacting with said transponder, at least a portion of said housing being overmolded with a soft elastomeric material (16) to seal said housing; and
a host computer (20) communicatively connected to said reader/writer device (10), preferably, by a cable (64) for sending commands and data to said device and receiving data from said device.

13. A radio frequency identification system as in claim 12, wherein said circuitry (18) has overvoltage protection which, preferably, is redundant.

14. A radio frequency identification system as in claim 12 or 13, wherein said reader/writer device is wand shaped.
